# EUROPÄISCHE PATENTSCHRIFT

(11) **EP 1 861 641 B1**
(45) Veröffentlichungstag und Bekanntmachung des Hinweises auf die Patenterteilung: **14.07.2010**
(21) Anmeldenummer: 06706030.1
(22) Anmeldetag: 09.03.2006
(51) Int. Cl.: F16J 15/32

(54) **DICHTUNG**
SEAL
GARNITURE D'ETANCHEITE

(30) Priorität: 19.03.2005 DE 102005012733
(43) Veröffentlichungstag der Anmeldung: 05.12.2007
(73) Patentinhaber: Schaeffler Technologies GmbH & Co. KG, 91074 Herzogenaurach (DE)
(72) Erfinder: WALTER, Wilhelm, 97725 Poppenhausen (DE); HÄPP, Alexander, 97461 Hofheim (DE); WILM, Bernhard, 97720 Nüdlingen (DE)
(86) Internationale Anmeldenummer: PCT/DE2006/000412
(87) Internationale Veröffentlichungsnummer: WO 2006/099835

(56) Entgegenhaltungen:
- EP-A- 0 319 822
- US-A- 4 399 998

## Beschreibung

### Gebiet der Erfindung

Die Erfindung betrifft eine Dichtung mit zwei voneinander weg gerichteten Dichtlippen zum Abdichten des Innenraumes eines Lagers.

### Hintergrund der Erfindung

Die Lagerungen von Rädern an Fahrzeugen weisen in der Regel eine zumeist hoch durch Schmutz und durch andere Einflüsse der Außenumgebung belastete Dichtung sowie axial auf der anderen Seite der Lagerung eine weniger belastete Dichtung auf. Aufgrund der unterschiedlichen Belastungen der Dichtung durch die Umwelt dichtet die höher belastete Dichtung das Innere der Radlagerung in der Regel als so genannte Kassettendichtung mit mindestens zwei Dichtlippen somit mehrfach dicht nach innen gegen die Außenumgebung ab.

Die Dichtlippen der Dichtungen sind elastisch gegen eine Dichtfläche vorgespannt. Die Dichtflächen sind zylindrische Mantelflächen (innenzylindrisch, vorzugsweise außenzylindrisch), deren Symmetrieachse die Rotationsachse des Lagers ist. Die Dichtlippen laufen auf der Dichtfläche relativ zur Dichtfläche in Rotationsrichtung um die Symmetrieachse ab. Dabei ist es möglich, dass die Dichtung relativ zur Umgebung fest ist und die Dichtfläche gegenüber der Dichtlippe rotiert oder dass die Dichtfläche relativ zur Umgebung fest ist und die Dichtlippe in Umfangsrichtung um die Symmetrieachse auf der Dichtfläche abläuft. In beiden Fällen entsteht Reibung im Kontakt zwischen der Dichtfläche und der Kontaktzone der Dichtlippe zur Dichtfläche. Die Intensität der Reibung ist von vielen verschiedenen Faktoren abhängig. Als Beispiele sind hier die Relativgeschwindigkeiten, die Werkstoffe sowie die Strukturen der Oberflächen der Reibpartner Dichtung - Reibfläche und die Schmierung im Reibkontakt genannt.

Einen bedeutenden Einfluss auf das Reibverhalten hat die Vorspannung, mit der die Dichtung gegen die Dichtfläche vorgespannt ist. Die Vorspannung ist durch Toleranzen und durch die Funktion der Dichtlippe bestimmt und entsprechend vorgewählt aber auch von nachfolgend beschriebenen Einflüssen im Betrieb der Dichtung abhängig.

Die Dichtungen sind in der Regel durch Druckgefälle zwischen dem Lagerinneren und der Außenumgebung belastet. Das Lagerinnere ist je nach Ausführung der Dichtung und von den Betriebsbedingungen abhängig mit Unter- oder Überdrücken im Vergleich zum Druck in der Außenumgebung belastet. Temperaturanstiege z.B. während des Fahrbetriebes führen zu Überdrücken im Innenraum des Lagers. Beim Stillstand des Lagers kühlt das Lagerinnere auf die Temperatur der Außenumgebung wieder ab - es entsteht Unterdruck im Lagerinneren. Sowohl Über- als auch Unterdrücke wirken sich nachteilig auf das Betriebsverhalten der Lagerung bzw. der Dichtungen aus und müssen deshalb ausgeglichen werden.

Die Dichtlippen der Dichtungen sind in der Regel so ausgelegt, dass diese in eine axiale Richtung gegen Druck sperren und in die andere Richtung Über- bzw. Unterdrücken gezielt nachgeben. Vorrangige Aufgabe der Dichtungen und damit der Dichtlippen ist der Schutz des Inneren der Radlagerung gegen Einflüsse aus der Außenumgebung durch Abdichten des Lagerinneren gegen die Einflüsse wie Schmutz und Wasser von außen. Überdruck außen aufgrund von Unterdruck im Inneren des Lagers presst die Dichtlippen stärker an die Dichtfläche und erhöht die Dichtwirkung - das heißt die Dichtlippen sperren in diesem Fall nach innen hin auch gegen Überdruck von außen. Durch diese nach innen sperrenden Dichtlippen kann der Unterdruck im Lagerinneren nicht ausgeglichen werden. Aufgrund des größeren Anpressdruckes von außen auf die Dichtlippen erhöht sich die oben genannte radiale Vorspannung und damit die Reibung zwischen Dichtung und Dichtflächen. Unerwünschter Verschleiß und höhere Betriebstemperaturen sind die Folge.

Nach innen sperrende Dichtlippen gleichen jedoch aus, wenn ein Druckgefälle von innen nach außen vorliegt. Überdrücke von innen heben die Dichtlippen im Dichtkontakt elastisch von den Dichtflächen ab. Überdrücke im Lagerinneren werden so nach außen ausgeglichen.

Das Lagerinnere ist in der Regel befettet. Bei hohen Temperaturen wird das Fett flüssig und entweicht u.U. bei Druckausgleich über die zuvor genannten Dichtlippen nach außen. Das kann zur Mangelschmierung des Wälzlagers führen. Es ist deshalb sinnvoll, Dichtungen mit wenigstens einer Dichtlippe zu versehen, die das Fett bei Druckausgleich von Überdrücken aus dem Inneren des Lagers nach außen im Lager halten. Derartige Dichtlippen sperren das Lagerinnere gegen das Austreten von Fett von innen nach außen aber auch bei Überdrücken im Lagerinneren gegen den Druckausgleich von innen nach außen. Über diese nach außen sperrenden Dichtlippen kann jedoch im Lagerinneren vorherrschender Unterdruck ausgeglichen werden, in dem diese Dichtlippen aufgrund von Überdruck in der Außenumgebung elastisch von der Dichtfläche abheben.

Wie anfangs erwähnt, ist es die vorrangige Aufgabe der Kassettendichtungen an der stark durch Umwelteinflüsse belasteten Seite der Radlagerung das Lagerinnere nach innen gegen die Einflüsse von außen zu sperren. Das Einbringen einer Einrichtung zum Ausgleich von Druckgefällen von außen nach innen verteuert die ohnehin komplex aufgebaute Kassettendichtung unnötig. Es bietet sich an, eine Anordnung zum Ausgleich von Unterdrücken im Lagerinneren deshalb in die weniger belastete und deshalb einfacher ausgebildete Dichtung zu integrieren.

Eine derartige Dichtung ist in US 4,844,480 beschrieben. Die Dichtung der gattungsbildenden Art weist an der nach innen sperrenden und in der Dichtungsanordnung axial außen liegenden ersten Dichtlippe eine oder mehrere Membranöffnungen als Belüftungsöffnungen auf. Mit den Belüftungsöffnungen ist in der weiter nach innen hin gegen Schmutz und Wasser sperrenden Dichtlippen ein axialer Durchgang für Druckausgleich in eine ringförmige Vorkammer der Dichtung geschaffen. Aufgrund der geringen Größe der Öffnungen kann jedoch kaum Schmutz in die Vorkammer gelangen. Die zweite Dichtung folgt der ersten Dichtlippe axial zum Lagerinneren hin und sperrt gegen den Austritt von Fett nach außen zur Vorkammer hin. Überdrücke in der Vorkammer wirken auf die zweite Dichtlippe bis diese abhebt und der Unterdruck im Lagerinnenraum ausgeglichen ist.

Eine derartige Dichtung ist für den Einsatz an Radlagerungen von Fahrzeugen nicht oder nur bedingt geeignet, da die Membranöffnungen während des Fahrbetriebes mit Schmutz verstopfen können und die Funktion der Dichtung somit negativ beeinflusst ist.

Aus der US 4 399 998 geht eine Dichtung für ein Lager hervor, die eine Vorkammer aufweist, die durch das elastische Dichtmaterial der Dichtung selbst und einen Innenring begrenzt ist. Die Dichtung besteht innenringseitig aus zwei radialen Dichtlippen, wobei die innere der beiden weitere strukturelle Merkmale innerhalb der Vorkammer aufweist.

Aus der EP 0 319 822 A1 ist eine Radialwellendichtung mit zwei Dichtlippen bekannt, wobei in einer der Dichtlippen angeordnete, druckabhängige Membranöffnungen mit der Außenatmosphäre verbindbar sind. Diese Membranöffnungen sind als bogenförmige Schnitte (10) ausgeführt, die in Abhängigkeit des Innendrucks zu einem Druckausgleich führen.

### Zusammenfassung der Erfindung

Die Aufgabe der Erfindung ist es daher, eine gegen Schmutz nicht anfällige Dichtung der gattungsbildenden Art zu schaffen. Gleichzeitig soll die Dichtung Lager gut gegen Umwelteinflüsse schützen und dabei im Fahrbetrieb so wenig wie möglich Reibung erzeugen.

Die Aufgabe ist mit einer Dichtung gelöst, die folgende Merkmale aufweist:
- Die Dichtung ist mit mindestens einer nach innen gegen Einflüsse von außen sperrenden ersten Dichtlippe und mit wenigstens einer axial auf eine ringförmige Vorkammer folgenden sowie vom Lagerinneren aus in Richtung Vorkammer sperrenden zweiten Dichtlippe versehen.
- Die Dichtlippen sind voneinander weg gerichtet. Dazu ist die erste Dichtlippe von einer Basis der Dichtung aus nach außen abgewinkelt, verläuft dabei von der Basis aus zwischen der ringförmigen Vorkammer und der Außenumgebung der Dichtung zumindest bis zu wenigstens einem ersten Dichtkontakt und übergreift und begrenzt die ringförmige Vorkammer zur Außenumgebung der Dichtung.

Die zweite Dichtlippe liegt der ersten Dichtlippe an der Vorkammer im wesentlichen axial gegenüber. Dazu ist die zweite Dichtlippe von der Basis der Dichtung aus in die andere Richtung nach innen abgewinkelt und begrenzt das Lagerinnere nach außen in Richtung der Vorkammer, wobei die zweite Dichtlippe von der Basis der Dichtung aus zwischen dem Lagerinneren und der Vorkammer zumindest bis zu wenigstens einem zweiten Dichtkontakt verläuft.
- Der Dichtkontakt ist der Reibkontakt der jeweiligen Dichtlippe mit einer zumindest linienförmig ausgebildeten Dichtfläche an einem Bauteil, das sich entweder relativ zur Dichtlippe rotierend bewegt oder auf dem die Dichtlippe der rotierenden Dichtung abläuft. Derartige Dichtflächen sind zum Beispiel an rotierenden oder stillstehenden Innenringen, Radbolzen, Achstummeln oder Wellen bzw. an Außenringen oder Gehäusen für die Lagerung ausgebildet.
- Die erste Dichtlippe weist wenigstens und vorzugsweise eine von außen in die Vorkammer führende Belüftungsöffnung auf. Die Belüftungsöffnung ist dabei kein allseitig durch das Material begrenztes Loch in der Dichtlippe sondern eine Ausnehmung an der wahlweise als Kante oder Fläche ausgebildeten Dichtkante der Dichtlippe. Die Dichtkante ist dabei unmittelbar im Dichtkontakt mit dem Bauteil. Die Ausnehmung ist zur Dichtfläche des Bauteils offen und somit in Richtung der Dichtfläche nicht von dem Material der Dichtlippe begrenzt. Dadurch ist die ansonsten um die Rotationsachse des Lagers umlaufend geschlossen dichtend anliegende erste Dichtlippe an der Dichtkante im ersten Dichtkontakt durch die Belüftungsöffnung in Umfangsrichtung um die Rotationsachse des Lagers einmal partiell unterbrochen.

Durch die Anordnung der Belüftungsöffnung an der Dichtkante der Dichtlippe ist diese wenig oder gar nicht gegen Verstopfung mit Schmutz gefährdet, da die Öffnung im bewegten Teil der Reibpaarung ausgebildet ist. Die ständigen elastischen Veränderungen an der sich bewegenden Dichtkante und somit auch an der Belüftungsöffnung veranlassen eine Selbstreinigung der eventuell verstopften Belüftungsöffnung. Die Formwerkzeuge für die Herstellung der vorzugsweise aus Elastomer gefertigten Dichtung sind einfach herzustellen.

Die Dichtfläche für beide Dichtlippen der Dichtung ist in der Regel an einer zylindrischen Fläche des Reibpartners der Dichtung ausgebildet. Denkbar ist jedoch auch, dass jede der Dichtungen für sich an einer Dichtfläche beliebiger rotationssymmetrischer Form anliegt. Denkbar ist auch, dass jede der Dichtlippen für sich an einer zylindrischen Dichtfläche abläuft, wobei die zylindrischen Dichtflächen voneinander im Durchmesser abweichen.

Die Dichtlippen sind in der Regel radial elastisch gegen den Dichtkontakt und somit gegen die Dichtfläche vorgespannt oder liegen zumindest noch an. Nur so ist abgesichert, dass die Dichtung auch in den ungünstigsten Toleranzlagen ohne Spalt an der Dichtfläche anliegt. Aufgrund der geringen Umfangsgeschwindigkeiten werden in der Regel Radialwellendichtringe eingesetzt, deren Dichtlippen auf Wellen usw. also auf Wellendichtflächen ablaufen. Der größte Durchmesser d_{I} zwischen den Dichtkanten an der engsten Öffnung der in einem Ausgangszustand nicht auf den Wellendichtflächen montierten Dichtlippe von Dichtungen des Standes der Technik ist deshalb geringer als der kleinstmögliche Durchmesser D_{A} der Wellendichtfläche, auf der die jeweilige Dichtlippe abläuft. Bei der Montage der Dichtung auf die Welle weitet sich die Öffnung der Dichtlippe auf den Durchmesser D_{A} der Dichtfläche elastisch auf und liegt mit Vorspannung an der Dichtfläche an.

Die Vorspannung, mit der eine Dichtlippe an der Dichtfläche anliegt, ist von dem Übermaß abhängig, das D_{A} gegenüber d_{I} aufweist. Dieses Übermaß ist von der Summentoleranz abhängig. Weiter ist die Vorspannung von der Art des Materials und von der Ausbildung der Dichtlippe abhängig. Eine dickwandige Dichtlippe wird mit mehr Vorspannung anliegen als eine vergleichsweise dünnwandige Dichtlippe gleichen Durchmessers, da beim Aufweiten mehr Material elastisch zwangsverformt und verdrängt wird. Der Dünnwandigkeit von Dichtlippen sind jedoch auch aus Festigkeitsgründen Grenzen gesetzt. Die Vorspannung ist demnach auch von der Menge des beim Aufweiten der Dichtlippe auf D_{A} verdrängten Materials abhängig. Zu große Vorspannung führt zu erhöhten Reibwiderstand, Temperaturentwicklung und zu unzulässigem Verschleiß.

Wenn d_{I} der abgewinkelten Dichtlippe im nicht montierten Ausgangszustand kleiner als D_{A} ist, wird diese sich, bei der Montage der Welle in die Dichtungsöffnung aus der einen axialen Richtung ohne Verwendung einer Montagehilfe umstülpen. Bei der Montage einer gattungsgemäßen Dichtung ist aufgrund der beiden zueinander entgegengesetzt abgewinkelten Dichtlippen für einen Dichtsitz auf einer gemeinsamen Dichtfläche eine Montagehilfe notwendig.

Mit einer Ausgestaltung der Erfindung ist deshalb vorgesehen, dass eine der beiden Dichtlippen, vorzugsweise die erste Dichtlippe, am Dichtkontakt radial elastisch vorgespannt dichtend anliegt und dabei in einem nicht montierten und nicht elastisch vorgespannten Ausgangszustand einen größtmöglichen Öffnungsdurchmesser d_{I-1} aufweist, der kleiner ist als ein kleinstmöglicher Außendurchmesser D_{A-1} einer ersten Dichtfläche im Dichtkontakt mit der einen Dichtlippe. Die andere der Dichtlippen, vorzugsweise die zweite Dichtlippe, liegt im montierten Zustand am Dichtkontakt zumindest radial an und weist jedoch dabei in dem Ausgangszustand einen kleinsten Öffnungsdurchmesser d_{I-2} auf, der größer ist, als ein größtmöglicher Außendurchmesser D_{A-2} einer zweiten Dichtfläche im Dichtkontakt mit der anderen der Dichtlippen. D_{A-1} ist in der Regel gleich groß D_{A-2}.

Bei der Montage der Welle oder Ähnlichem kann die Welle durch die Öffnung d_{I-2} zunächst berührungslos oder zumindest ohne Vorspannung hindurch geführt werden und weitet dann die Dichtlippe mit dem Öffnungsdurchmesser d_{I-1} auf. Da beide Dichtlippen eine gemeinsame Basis aufweisen bewirkt das mit dem Aufweiten der einen Dichtlippe verdrängte Material und/oder die Ausweichbewegung der Basis ein Einengen von d_{I-2}, so dass d_{I-2} zumindest gleich D_{A-2} ist. Der Einsatz von Montagehilfen ist nicht mehr notwendig. Die Vorspannung in der Dichtung und damit die Reibung im Reibkontakt ist reduziert, da das beim Aufweiten des Öffnungsdurchmessers der ersten Dichtlippe elastisch verdrängte Material zumindest teilweise den Öffnungsdurchmesser der zweiten Dichtlippe reduziert und so weniger elastische Vorspannung auf die erste Dichtlippe ausübt.

### Beschreibung der Zeichnungen

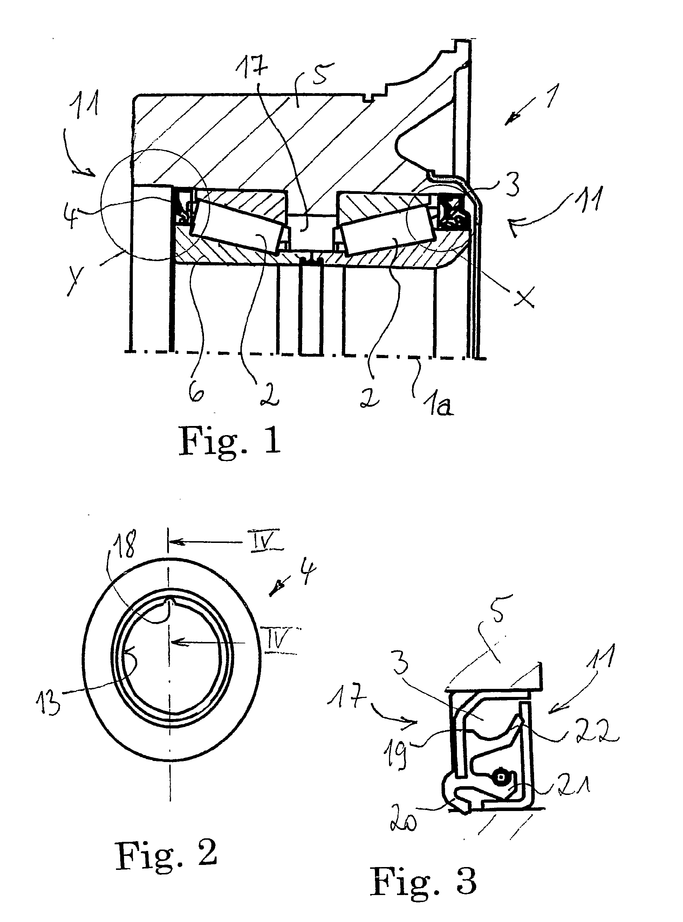

Die Erfindung wird nachfolgend an einem Ausführungsbeispiel näher erläutert. Figur 1 zeigt eine Radlagerung 1 in einem Längsschnitt entlang der Rotationsachse 1 a teilweise dargestellt. Die Radlagerung 1 weist zwei Lager 2, eine Kassettendichtung 3 und ein Ausführungsbeispiel der erfindungsgemäßen Dichtung 4 auf. Die Lager 2 sitzen in einem Gehäuse 5.

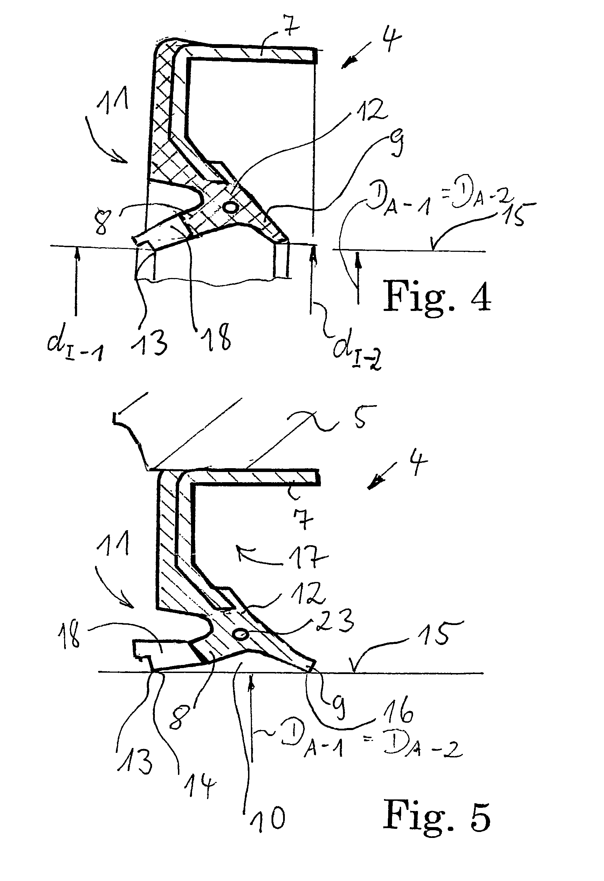

Die Dichtung 4 sitzt an einer weniger durch Schmutz belasteten Seite der Radlagerung 1 in dem Gehäuse 5 und dichtet gegen einen Innenring 6 des einen Lagers 2 ab. In Figur 2 ist die Dichtung 4 in einem Ausgangszustand nicht in das Gehäuse montiert und nicht maßstäblich in einer Gesamtansicht dargestellt. Figur 4 zeigt einen Längsschnitt durch die Dichtung 4 entlang der Linie IV - IV aus Figur 2. Figur 5 zeigt das Detail Y nach Figur 1 vergrößert und nicht maßstäblich.

Die Dichtung 4 besteht aus einer Armierung 7 und einer (ersten) Dichtlippe 8 sowie einer (zweiten) Dichtlippe 9. Die Dichtlippe 8 ist von einer Basis 12 an der Armierung 7 nach außen vom Lager 2 weg abgewinkelt und erstreckt sich von der Basis 12 bis zu einer Dichtkante 13 am Dichtkontakt 14 mit der Dichtfläche 15 am Außenumfang des Innenringes 6. Dabei schließt die Dichtlippe 8 eine Vorkammer 10 gegen die Außenumgebung 11 der Radlagerung 1 ab und sperrt gegen Eindringen von Schmutz und Wasser aus der Außenumgebung 11 in die Vorkammer 10.

Die Dichtlippe 9 ist von der Armierung 7 bzw. von der Basis 9 nach innen zum Lager 2 hin abgewinkelt und erstreckt sich von der mit der Dichtlippe 8 gemeinsamen Basis 12 bis zu einem Dichtkontakt 16 an der Dichtfläche 15 und verläuft dabei von der Basis 9 weg zwischen der Vorkammer 10 und dem Lagerinneren 17.

Die Dichtlippe 8 weist eine von der Außenumgebung 11 in die Vorkammer 10 führende Belüftungsöffnung 18 auf. Die Belüftungsöffnung 18 eine Ausnehmung an der Dichtkante 13. Die Dichtkante 13 ist an der Dichtfläche 15 im Dichtkontakt 14 mit dem Innenring 6. Die Ausnehmung ist zur Dichtfläche 15 des Bauteils offen und somit in diese Richtung nicht von dem Material der Dichtlippe 8 begrenzt. Dadurch ist ansonsten um die Rotationsachse 1 a umlaufend geschlossen dichtend anliegende Dichtlippe 8 an der Dichtkante 13 am Dichtkontakt 14 durch die Belüftungsöffnung 18 in Umfangsrichtung um die Rotationsachse 1 a einmal partiell unterbrochen.

Die Dichtlippe 8 liegt am Dichtkontakt 14 radial elastisch vorgespannt dichtend an. Dazu weist die Dichtlippe 8 in einem in Figur 4 dargestellten nicht montierten und nicht elastisch vorgespannten Ausgangszustand einen größtmöglichen Öffnungsdurchmesser d_{I-1} auf. d_{I-1} ist kleiner als der kleinstmögliche Außendurchmesser D_{A-1} der Dichtfläche 15 im Dichtkontakt 14 mit der der Dichtlippe 8. Die Dichtlippe 9 liegt im montierten Zustand am Dichtkontakt 16 zumindest radial an und weist dabei in dem Ausgangszustand einen kleinsten Öffnungsdurchmesser d_{I-2} auf, der größer ist, als der größtmöglicher Außendurchmesser D_{A-1} der Dichtfläche 15 im Dichtkontakt 16 mit der Dichtlippe 9. Wenn die Dichtlippen 8 und 9 dichtend am Innenring 6 anliegen, ist der Öffnungsdurchmesser der Dichtlippe 8 auf D_{A-1} aufgeweitet und der Öffnungsdurchmesser der Dichtlippe 9 auf D_{A-1} reduziert. Dabei kippt die Dichtung 4 im Längsschnitt betrachtet um eine durch die Basis 12 sowie ringförmig um die Rotationsachse 1a verlaufender gedachter Kippachse 23 mit der zweiten Dichtlippe 9 in Richtung der Dichtfläche 15.

Die Kassettendichtung 3 (Figur 3) weist drei von einem Träger 19 abgewinkelte Dichtlippen 20, 21, 22 auf, die das Lagerinnere 17 gegen Umwelteinflüsse von außen aus der Außenumgebung 11 sperren. Die Dichtlippe 9 sperrt gegen das Austreten von Fett aus dem Lagerinneren 17 und damit auch gegen Überdruck im Lagerinneren 17. Der Überdruck im Lagerinneren 17 wird über die Dichtlippen 20, 21 und 22 der Kassettendichtung 3 ausgeglichen. Unterdruck im Lagerinneren 17 wird über die Dichtlippe 9 ausgeglichen. Unterdruck in der Vorkammer 10 kann aufgrund der Belüftungsöffnung 18 nicht entstehen, so dass beim Ausgleich von Unterdruck im Lagerinneren 17 durch die Dichtlippe 9 über die Vorkammer 10 der Druckausgleich in der Vorkammer 10 von der Außenumgebung 11 über die Belüftungsöffnung 18 abgesichert ist.

## Patentansprüche

1. Dichtung (4) zum Abdichten des Lagerinneren (17) eines Lagers (2), bei der
- eine erste Dichtlippe (8) zwischen einer ringförmigen Vorkammer (10) und der Außenumgebung (11) der Dichtung (4) von einer Basis (12) der Dichtung (4) aus bis zu wenigstens einem ersten Dichtkontakt (14) nach außen abgewinkelt ist,
- eine zweite Dichtlippe (9) zwischen dem Lagerinneren (17) und der Vorkammer (10) von der Basis (12) aus zumindest bis einem zweiten Dichtkontakt (16) nach innen abgewinkelt ist,
- die erste Dichtlippe (8) dazu vorgesehen ist im ersten Dichtkontakt (14) ansonsten um die Rotationsachse (1a) des Lagers (2) umlaufend geschlossen dichtend anzuliegen,
**dadurch gekennzeichnet, dass**
- die erste Dichtlippe (8) mit wenigstens einer von außen in die Vorkammer (10) führenden Belüftungsöffnung (18) versehen ist, und
- die erste Dichtlippe (8) am ersten Dichtkontakt (14) durch die zu einer ersten Dichtfläche (15) hin offene Belüftungsöffnung (18) in Umfangsrichtung um die Rotationsachse (1a) des Lagers (2) einmal partiell unterbrochen ist.

2. Dichtung nach Anspruch 1, bei der eine Dichtlippe (8) der beiden Dichtlippen (8, 9) am Dichtkontakt (14) radial elastisch vorgespannt dichtend anliegt und dabei in einem nicht elastisch vorgespannten Ausgangszustand einen größtmöglichen Öffnungsdurchmesser d_{I-1} aufweist, der kleiner ist als ein kleinstmöglicher Außendurchmesser D_{A-1} der ersten Dichtfläche (15) im Dichtkontakt (14) mit der einen Dichtlippe (8) und bei der die andere Dichtlippe (9) der Dichtlippen (8, 9) am Dichtkontakt (16) zumindest radial anliegt und dabei in dem Ausgangszustand einen kleinsten Öffnungsdurchmesser d_{I-2} aufweist, der größer ist, als ein größtmöglicher Außendurchmesser D_{A-2} einer zweiten Dichtfläche (15) im Dichtkontakt (16) mit der anderen Dichtlippe (9).

3. Dichtung nach Anspruch 2, bei dem die Dichtflächen (15) an einer gemeinsamen außenzylindrischen Mantelfläche ausgebildet sind.

4. Radlagereinheit (1) mit einer Dichtung nach Anspruch 1, mit einer der Dichtung (4) an dem Lagerinneren (17) axial gegenüberliegenden Kassettendichtung (3), wobei die Kassettendichtung (3) wenigstens zwei entgegengesetzt zur ersten Dichtlippe (8) nach außen abgewinkelte dritte Dichtlippen (20, 21, 22) aufweist.

## Claims

1. Seal (4) for sealing off the bearing interior (17) of a bearing (2), in which
- a first sealing lip (8) between an annular prechamber (10) and the external surroundings (11) of the seal (4) is angled outward from a base (12) of the seal (4) up to at least a first sealing contact (14),
- a second sealing lip (9) between the bearing interior (17) and the prechamber (10) is angled inward from the base (12) at least up to a second sealing contact (16),
- the first sealing lip (8) is intended otherwise, upon first sealing contact, to bear sealingly in a continuously closed manner about the axis of rotation (1a) of the bearing (2),
**characterized in that**
- the first sealing lip (8) is provided with at least one ventilation orifice (18) leading from outside into the prechamber (10), and
- the first sealing lip (8) is partially interrupted once, at first sealing contact (14), by the ventilation orifice (18) opening towards a first sealing surface (15) in the circumferential direction about the axis of rotation (1a) of the bearing (2).

2. Seal according to Claim 1, in which one sealing lip (8) of the two sealing lips (8, 9) bears sealingly, radially prestressed elastically, at sealing contact (14) and in this case, in a not elastically prestressed initial state, has a largest possible orifice diameter d_{I-1} which is smaller than a smallest possible outside diameter D_{A-1} of the first sealing surface (15) in sealing contact (14) with the one sealing lip (8), and in which the other sealing lip (9) of the sealing lips (8, 9) bears at least radially at sealing contact (16) and in this case, in the initial state, has a smallest orifice diameter d_{I-2} which is larger than a largest possible outside diameter D_{A-2} of a second sealing surface (15) in sealing contact (16) with the other sealing lip (9).

3. Seal according to Claim 2, in which the sealing surfaces (15) are formed on a common outer-cylindrical surface area.

4. Wheel bearing unit (1) having a seal according to Claim 1, with a cartridge seal (3) lying axially opposite the seal (4) in the bearing interior (17), the cartridge seal (3) having at least two third sealing lips (20, 21, 22) angled outward in opposite directions to the first sealing lip (8).

## Revendications

1. Garniture d'étanchéité (4) pour étancher l'intérieur du palier (17) d'un palier (2), dans laquelle :
- une première lèvre d'étanchéité (8) entre une préchambre (10) de forme annulaire et l'environnement extérieur (11) de la garniture d'étanchéité (4) est coudée vers l'extérieur depuis une base (12) de la garniture d'étanchéité (4) jusqu'à au moins un premier contact d'étanchéité (14),
- une deuxième lèvre d'étanchéité (9) entre l'intérieur du palier (17) et la préchambre (10) est coudée vers l'intérieur depuis la base (12) au moins jusqu'à un deuxième contact d'étanchéité (16),
- la première lèvre d'étanchéité (8) est prévue lors du premier contact d'étanchéité (14) par ailleurs pour s'appliquer hermétiquement avec un pourtour fermé continu autour de l'axe de rotation (1a) du palier (2),
**caractérisée en ce que**
- la première lèvre d'étanchéité (8) est pourvue d'au moins une ouverture de ventilation (18) conduisant de l'extérieur dans la préchambre (10) et
- la première lèvre d'étanchéité (8) au niveau du premier contact d'étanchéité (14), étant interrompue en partie une fois par l'ouverture de ventilation (18) ouverte vers une première surface d'étanchéité (15), dans la direction périphérique autour de l'axe de rotation (1a) du palier (2).

2. Garniture d'étanchéité selon la revendication 1, dans laquelle une lèvre d'étanchéité (8) des deux lèvres d'étanchéité (8, 9) s'applique hermétiquement de manière précontrainte élastiquement radialement contre le contact d'étanchéité (14), et présente en l'occurrence dans un état initial non précontraint élastiquement, un diamètre d'ouverture maximum d_{I-1} qui est inférieur à un diamètre extérieur minimum D_{A-1} de la première surface d'étanchéité (15) en contact d'étanchéité (14) avec la première lèvre d'étanchéité (8), et dans laquelle l'autre lèvre d'étanchéité (9) des lèvres d'étanchéité (8, 9) s'applique au moins radialement contre le contact d'étanchéité (16), et présente en l'occurrence dans l'état initial un diamètre d'ouverture minimum d_{I-2} qui est supérieur à un diamètre extérieur maximum D_{A-2} d'une deuxième surface d'étanchéité (15) en contact d'étanchéité (16) avec l'autre lèvre d'étanchéité (9).

3. Garniture d'étanchéité selon la revendication 2, dans laquelle les surfaces d'étanchéité (15) sont réalisées sur une surface d'enveloppe cylindrique extérieure commune.

4. Unité de palier de roue (1) comprenant une garniture d'étanchéité selon la revendication 1, avec une garniture de cassette (3) opposée axialement à la garniture d'étanchéité (4) sur l'intérieur du palier (17), la garniture de cassette (3) présentant au moins deux troisièmes lèvres d'étanchéité (20, 21, 22) coudées vers l'extérieur à l'opposé de la première lèvre d'étanchéité (8).
